# EUROPEAN PATENT SPECIFICATION

(11) **EP 0 706 435 B1**
(45) Date of publication and mention of the grant of the patent: **16.01.2002**
(21) Application number: 94920237.8
(22) Date of filing: 16.06.1994
(51) Int. Cl.: B23P 6/04, B23G 5/06, F16B 33/02

(54) **APPARATUS FOR REPAIRING CRACKS**
VORRICHTUNG ZUM REPARIEREN VON RISSEN
OUTILLAGE DE REPARATION DE FISSURES

(30) Priority: 16.06.1993 US 77854; 17.12.1993 US 174121
(43) Date of publication of application: 17.04.1996
(73) Proprietor: Rollins, Louise A., Turlock, California 95380 (US)
(72) Inventor: Reed, Gary Jack, Turlock, California 95382 (US)
(74) Representative: Colens, Alain
(86) International application number: US9406816
(87) International publication number: WO9429075

(56) References cited:
- US-A- 154 864
- US-A- 250 728
- US-A- 310 462
- US-A- 3 295 580
- US-A- 3 660 233
- US-A- 4 171 012
- US-A- 4 599 781
- US-A- 4 662 806
- US-A- 4 824 279
- US-A- 4 845 828

## Description

### Technical Field

The following invention relates to methods and devices for repairing cracks in materials. More specifically, the present invention relates to methods and devices for crack repair in casted parts by drilling holes in the crack, threading the holes and screwing threaded pins into the holes, especially pins having threads which extend outward away from a central axis of the pin and upward, toward a head of the pin.

### Background Art

Materials often exhibit a variety of different failure mechanisms. On occasion, materials are loaded beyond a tensile strength of the material and the material fractures abruptly and completely. In these circumstances the material is usually irreparable and must be replaced. However, often materials do not fail in an abrupt complete manner, but rather fail due to fatigue or localized stresses which exceed design criteria, causing cracks to form in the material. Often when these cracks initially form, the material is still functional for its desired purpose. For instance, a reciprocating machine may receive cracks in its structural material and yet continue to operate, albeit at perhaps a lesser efficiency. Cracks thus serve as indicators that a material is being over stressed and yet also provides an opportunity for remedial measures to be taken without requiring entire replacement of the affected materials.

While crack repair methods have become well known in the art, they have traditionally been looked upon as primarily a temporary or stopgap measure which usually cannot be relied upon to permanently repair a crack-damaged material. Usually "repaired" cracks are still weaker than surrounding material and thus are subject to recracking or other failure in the same location. However, crack repair is attractive in that it can often extend the life of the material without requiring significant downtime for the machinery which utilizes the material. Thus, crack repair can result in the avoidance of significant replacement costs.

Accordingly, a need exists for a method and apparatus for crack repair which can be performed in a low-cost, timely manner and yet repair the crack to a level which makes the material as strong as (or stronger than) it was before the crack occurred.

Crack repair pins or "plugs" have been known in the art which are threaded into holes drilled in the cracks to prevent cracks from continuing to propagate. These "plugs" have also been somewhat effective in resealing materials such as cast iron casings which require that they maintain a somewhat pressurized environment without allowing fluids to escape therefrom.

In addition, locks are known in the art which can draw cracks together somewhat and extend the Life a material which is cracked.

However, neither of these solutions can effectively strengthen the material to a level which makes it stronger than it was before the crack occurred and also effectively seal up the crack to establish a pressure-withstanding seam. The device of this invention, when used in accordance with the method of this invention, includes pins which have threads that angle upward toward the head of the pin. These upwardly angled threads engage with complementally formed threads in holes drilled into the crack. When the pins are advanced into the crack, the upwardly sloped threads draw opposite sides of the crack toward each other. Thus, the crack is actually drawn closed and sealed by the pins located within the crack.

The following prior art reflects the state of the art of which applicant is aware and is included herewith to discharge applicant's acknowledged duty to disclose relevant prior art. It is stipulated, however, that none of these references teach singly nor render obvious when considered in any conceivable combination the nexus of the instant invention as disclosed in greater detail hereinafter and as particularly claimed.

| INVENTOR | PATENT NO. | ISSUE DATE |
|---|---|---|
| Harvey | 154,864 | September 8,1874 |
| Harman | 2,011,484 | August 13, 1935 |
| Hays | 2,121,692 | June 21,1938 |
| Kirby | 2,291,162 | July 28, 1942 |
| Michaels | 2,361,701 | October 31, 1944 |
| Murphy | 2,506,233 | May 2,1950 |
| Javor | 2,649,650 | August 25, 1953 |
| Diperstein | 2,951,506 | September 6, 1960 |
| Diperstein | 2,998,645 | September 5, 1961 |
| Forsythe | 3,066,400 | December 4, 1962 |
| Dalke, et al | 3,660,233 | May 2,1972 |
| Diperstein | 4,599,781 | July 15, 1986 |
| Reed | 4,662,806 | May 5,1987 |
| Casazza | 4,824,279 | April 25,1989 |
| Reed | 4,845,828 | July 11, 1989 |
| Giannuzzi | 4,892,429 | January 9,1990 |

| **FOREIGN PATENT DOCUMENTS** | | | | | |
|---|---|---|---|---|---|
| **DOCUMENT NUMBER** | **DATE** | **NAME** | **CLASS** | **SUB- CLASS*** | **FILING DATE** |
| AT 154,074 | 11/1953 | Metalock of Australia Pty., Ltd. | 71.6 | | 05/1952 |
| GB 350,141 | 06/1931 | Arenz | 411 | 411 | 04/1930 |
| IT 456,431 | 04/1950 | | 411 | 411 | |

Various devices are known in the art which include threads which extend upwardly. However, none of these threaded devices are configured to include all of the features of the pins of this invention. Furthermore, none of the threaded devices having upwardly sloping threads have been utilized in conjunction with a method for sealing cracks within a material.

### Disclosure of Invention

The invention is principally directed to a method for cold repair of a crack in a cast monolith where the crack is defined as a gap passing through a portion of the monolith to define at least two sides in the monolith separated from each other by a width of the crack. The method comprises the steps of
- drilling a hole extending into the crack such that one side of the crack includes a portion of the hole and another side of the crack includes another portion of the hole, the hole including hole threads therein with a major diameter and a minor diameter
- threading a pin in the hole, having a head including a means to transfer torque to the pin, a threaded shaft on the pin extending from the head along a central axis, and means for opposing axial translation of the pin positioned to contact the material near the crack.

The method is characterised in that a portion of each hole thread adjacent the major diameter is closer to the surface than another portion of the hole threads.

It is also characterised in that at least one of the shaft threads includes a crest defining a major diameter of the threaded shaft, a root defining a minor diameter of the threaded shaft, and an upper surface extending from a bottom edge of the root to an upper edge of the crest, the upper surface having a portion thereof extending toward the crest at an angle greater than zero from a reference plane perpendicular to the central axis of the pin, the threading allowing the opposition means, for example a shoulder, to coact with the threads of the hole and the threads of the pin and cause further rotation of the pin to force the first side of the crack and the second side of the crack together.

The invention is also directed to a pin for location into a threaded hole for cold repair of a crack according to the above mentioned method, the pin comprising in combination::
- a head on the pin including a means to transfer torque to the pin
- a threaded shaft on the pin extending from the head along a central axis,
wherein at least one of the shaft threads includes a crest defining a major diameter of the threaded shaft, a root defining a minor diameter of the threaded shaft, and an upper surface extending from a bottom edge of the root to an upper edge of the crest, the upper surface having a portion thereof extending toward the crest at an angle greater than or equal to zero from a reference plane perpendicular to the central axis of the pin, and the pin being provided with a shoulder interposed between the head and the shaft, the shoulder having a lower side provided with a cusp like relieved area.

In a preferred form, the pin of this invention includes a head with a means to apply torque thereto, a neck below the head, a shoulder below the neck and a threaded shaft below the shoulder. The head can include any of a variety of torque receiving configurations. For instance, the head can have multiple facets dimensioned to be addressed by facets of a wrench, slots formed complemental to slots of a screw driver, or other similar structure. The head thus receives torque and causes the pin to rotate about a central, long axis thereof.

The neck is interposed between the head and the shoulder and defines an area of the pin having a weakest tensile strength when experiencing torsional loads. Thus, when torque is applied through the head at greater and greater magnitudes, the pin fractures at the neck before fracturing in any other location.

The shoulder is interposed between the neck and the threaded shaft and defines a greater diameter portion. As the pin is threaded into a complementally formed hole, the shoulder abuts against an outer surface of the hole, identifying a point at which the pin can translate no further along the central, long axis.

The threaded shaft is a substantially cylindrical construct having a top adjacent the shoulder and a bottom defining a surface of the pin opposite the head. The threaded shaft has threads circumscribing an outer periphery thereof. The threads include a crest defining a major diameter thereof and a root defining a minor diameter thereof. An upper surface extends from a bottom edge of the root to an upper edge of the crest. A lower surface extends from a top edge of the root to a lower edge of the crest.

The upper surface extends upward linearly from the bottom edge of the root to the upper edge of the crest. Similarly, the lower edge extends linearly upward from the top edge of the root to the lower edge of the crest. Thus, the upper edge of the crest is closer to the head than the adjacent bottom edge of the root.

In mending a crack, holes are drilled such that a central axis of the hole extends between opposite sides of the crack. Each hole is configured such that the diameter and the threads thereof are substantially complemental to the threaded shaft of the pins. However, a major diameter of the hole is slightly greater than a major diameter of the pin. A pin is thTeaded into the hole by applying torque through the head until the shoulder abuts the surface of the material At that point, the pin can no longer translate along the central axis and into the material.

Further torque is applied to the head causing the pin to rotate and causing the upper surface of the threads to slide along the complementally formed threads of the hole drawing opposite sides of the hole toward each other and hence opposite sides of the crack toward each other. The application of torque is continued until a maximum torsional force for the neck is reached causing the head to shear off at the neck.

Multiple threaded holes are located along the length of the crack and filled with pins to mend the crack. In addition, locks may first be placed transverse to the crack which fit within complementally formed lock receiving holes having a slightly greater length than the locks. Thus, when the locks are placed within the lock receiving holes, the crack is drawn closed somewhat.

### Brief Description of Drawings

Figure 1 is an elevational view of a pin for the method of this invention screwed into a hole in the material being mended, the hole shown in section.
Figure 2 is a elevational view of the pin of figure 1 before threading into the hole of figure 1.
Figure 3 is a partial section detail view of the pin of figure 2 taken along the line 3 - 3 of figure 2.
Figure 4 is a sectional view of the hole shown in figure 1.
Figure 5 is elevational view of a taping bit configured to form the threads shown in the hole of figure 4.
Figure 6 is a detail of a portion of the teeth shown in figure 5.
Figure 7 is bottom view of that which is shown in figure 5.
Figures 8 through 11 reveal steps in the crack repair method of this invention showing the sequence of pin application preferred for mending a crack in a material.
Figure 12 reveals an alternative crack mending arrangement including locks.
Figure 13 is a flow chart revealing the steps involved in the method of crack repair of this invention.
Figure 14 is an elevational view of a pin according to the invention, which is an alternative embodiment of that which is shown in figure 2 with some features shown in section and some hidden features revealed.
Figure 15 is an elevational view of an alternative embodiment of that which is shown in figure 14 with some hidden features revealed.
Figure 16 is an elevational view of an alternative embodiment of that which is shown in figure 14 with some hidden features revealed.
Figure 17 is a sectional view of an alternative embodiment of that which is shown in figure 2 in place within a hole which is an alternative embodiment of the hole shown in figure 4.
Figure 18 is a schematic view of the pin of figure 17 revealing how the pin of figure 17 would mend a crack in a corner of a material.
Figure 19 is an elevational view of a series of pins, representing an alternative embodiment of this invention, within a hole shown in section.
Figure 20 is a front view of an alternative embodiment of the pin of this invention.
Figure 21 is a sectional view of an alternative embodiment of the hole shown in figure 1.
Figure 22 is an isometric view of the pin of figure 20 entering the hole of figure 21.
Figure 23 is an isometric view of that which is shown in figure 22 with the pin seated within the hole.
Figure 24 is an isometric view of that which is shown in figure 23 with a portion of a head of the pin ground flush with the surface.
Figure 25 is an isometric view of a bit utilized to form the hole of figure 21 with the hole shown in section.
Figure 26 is an alternative embodiment of the bit shown in figure 25.
Figures 27 through 29 are perspective views revealing successive steps in utilizing an alternative cusped pin within a hole formed by the bit shown in figure 26.
Figure 30 is an isometric view of a roughing tap utilized in forming the hole of figure 21.
Figure 31 is an isometric view of a finishing tap utilized after the roughing tap of figure 30 in forming threads within the hole of figure 21.
Figure 32 is an isometric view of a bottoming tap utilized after the finishing tap of figure 31 in forming the threads within the hole of figure 21.

### Best Mode(s) For Carrying Out The Invention

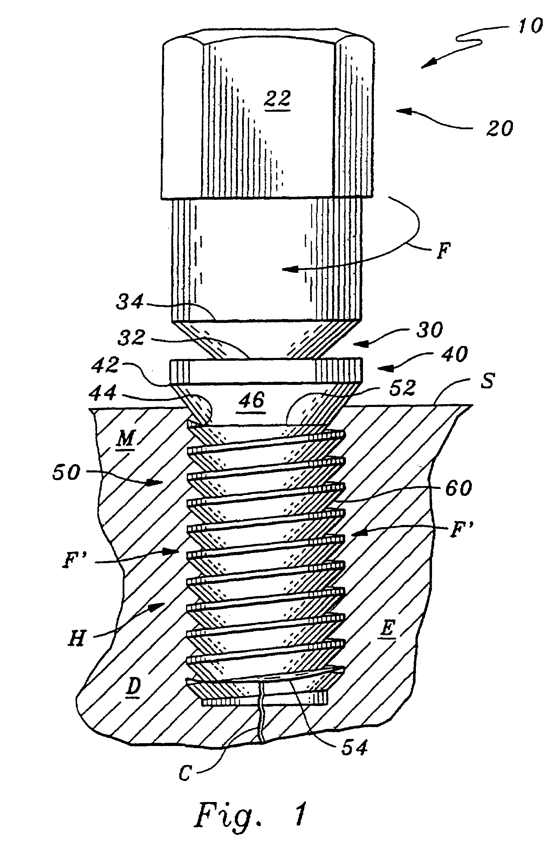

Referring to the drawings wherein like reference numerals represent like parts throughout, reference numeral 10 (figure 1) is directed to a pin for repairing a crack C in a material M. The pin 10 is threaded into a hole H drilled into the crack C and utilizes upwardly directed threads 60 to draw opposite sides of the crack C toward each other, thus strengthening and sealing the material M surrounding the crack C.

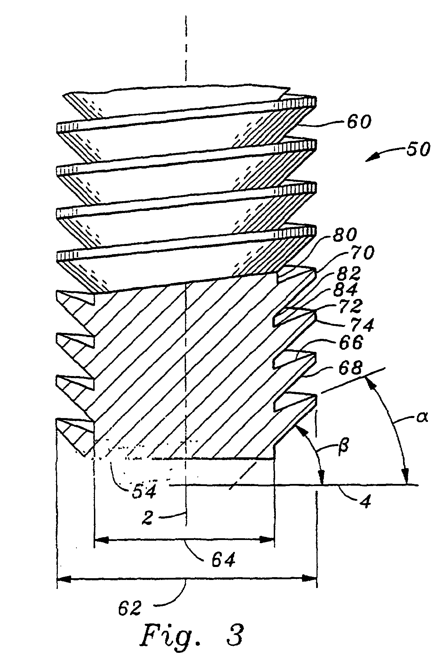

In essence, and referring to figures 1 through 4, the pin 10 includes a head 20 at an uppermost portion thereof, a neck 30 below the head 20, a shoulder 40 below the neck 30 and a threaded shaft 50 extending below the shoulder 40. The threaded shaft 50 includes threads 60 thereon which include an upper surface 66 and a lower surface 68 (figure 3) which extend upward toward the head 20 from a minor diameter 64 to a major diameter 62. Thus, a crest 70 of each thread 60 is closer to the head 20 than a portion of the thread 60 between adjacent roots 80 at the minor diameter 64.

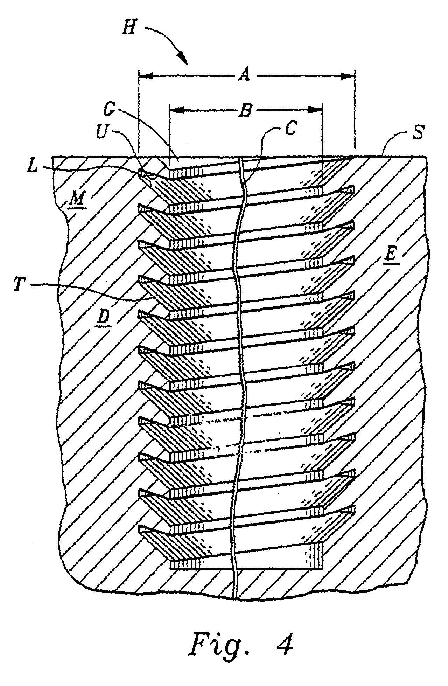

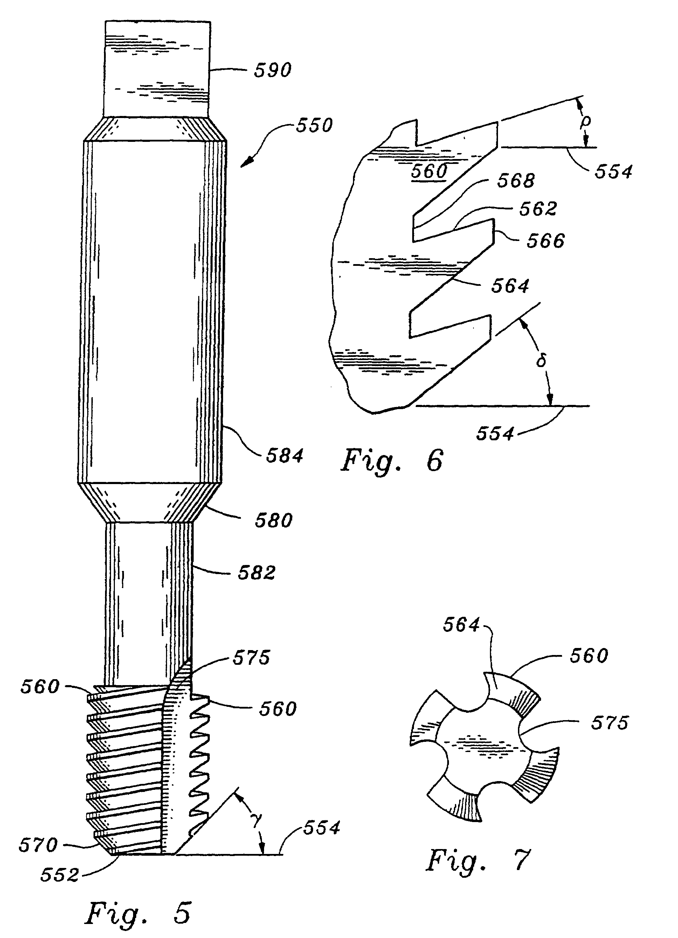

The hole H (figure 4) is drilled into the material through a plane which is coincident with an exposed portion of the crack C. The hole H is threaded with threads T by a tapping bit 550 (figures 5 through 7) which causes the threads T to be substantially complemental to the threads 60 of the pin 10. The threads T of the hole H thus are closer to a surface S of the material M at a major diameter A of the threads T than at a minor diameter B of the threads T.

The head 20 is coupleable to a torque applying instrument which can thread the pin 10 into the hole H. The shoulder 40 has a greater diameter portion 42 which has a diameter greater than a diameter of the threaded shaft 50. When the threaded shaft 50 has been screwed entirely into the hole H, the greater diameter 42 of the shoulder 40 abuts against the surface S of the material M. This abutment prevents the pin 10 from translating along a central long axis 2 any deeper into the hole H.

Upon further rotating of the pin 10, the upper surface 66 of the threads 60 engage the threads T of the hole H forcing a first curved wall G of the hole H on one first side D of the crack C toward a second curved wall I of the hole H on a second side E of the crack C. The first side D and the second side E of the crack C are thus drawn toward each other.

The neck 30 includes a necked down crease 32 which fractures, shearing the head 20 off of the pin 10 when a magnitude of torque applied to the pin 10 reaches a maximum torque to be applied to the threads 60. Thus, the neck 30 prevents the threads 60 from being overly stressed torsionally.

More specifically, and referring in detail to figures 1 through 4, the pin 10 and associated hole H are shown in detail. The pin 10 includes the head 20 at an uppermost end thereof. The head 20 preferably includes multiple facets 22 arranged to allow a torque applying device to effectively engage the head 20. Preferably, the facets 22 are arranged in a hexagonal pattern to be engaged by a variety of commonly available torque applying tools. Alternatively, various other facet arrangements could be utilized or slots such as those receiving a screw driver or other tool could also be used. The head 20 is preferably radially symmetrical about a central axis 2 passing through the pin 10.

The neck 30 joins the head 20 to the shoulder 40. The neck 30 is preferably arranged as a single frustum with a greater diameter base 34 adjacent the head 20 and a lesser diameter crease 32 adjacent the shoulder 40. The crease 32 and base 34 thus define parallel planes of the frustum of the neck 30. The crease 32 is preferably designed to have a cross-sectional area which is less than a cross-sectional area of any other portion of the pin 10. Thus, when torsional loads increase, the pin 10 is most likely to fracture at the crease 32 than at any other location along the pin 10.

In addition, the crease 32 is preferably provided with a cross-sectional area which gives the crease 32 a maximum torsional load characteristic which is less than a torsional load necessary to cause damage to the threads 60 of the threaded shaft 50. In this way, if torsional loads on the pin 10 begin to approach a level which could cause damage to the threads 60 of the threaded shaft 50, the crease 32 of the neck 30 will fracture before a thread 60 damaging load is reached.

The shoulder 40 includes a greater diameter portion 42 directly adjacent the crease 32 of the neck 30. The greater diameter 42 of the shoulder 40 preferably has a greater diameter than a major diameter 62 of the threads 60. The greater diameter 42 also preferably has a greater diameter than a major diameter A of the hole H.

The greater diameter 42 transitions to a lesser diameter 44 of the shoulder 40 directly adjacent a top 52 of the threaded shaft 50. A frustum 46 is formed between the greater diameter 42 of the shoulder 40 and the lesser diameter 44 of the shoulder 40. This frustum 46 is somewhat irregular adjacent the lesser diameter 44 in that it transitions into the top 52 of the threaded shaft 50 where the helically wound threads 60 terminate. The shoulder 40 abuts against the surface S of the material M surrounding the hole H when the pin 10 is threaded into the hole H a sufficient distance along the central axis 2. The shoulder 40 prevents the pin 10 from translating into the hole H beyond a finite amount. The shoulder 40 thus causes the threads 60 of the pin 10 to draw the first side D and second side E of the crack C toward each other, rather than the thread 60 drawing the pin 10 further into the hole H along the central axis 2. The shoulder 40 thus acts to redirect forces applied between the pin 10 and the hole H.

The threaded shaft 50 is a substantially cylindrical construct which extends from the lesser diameter 44 of the shoulder 40 at a top 52 thereof to a bottom 54 which defines an opposite end of the pin 10 from the head 20. The threaded shaft 50 is oriented about the central axis 2 with the central axis 2 passing through a geometric center of the threaded shaft 50. The threaded shaft 50 has threads 60 formed about the cylindrical surface thereof.

The threads 60 are actually one continuous helically wound thread which begins at the bottom 54 and spirals up to the top 52. While this single thread design is preferred, other arrangements including compound series of threads which wind helically together from the bottom 54 to the top 52 could also be utilized.

The threads 60 include a crest 70 defining a major diameter 62 of the threads and a root 80 defining a minor diameter 64 of the threads 60. As shown in detail in figure 3, the threads 60 have an upper surface 66 which extends from a bottom edge 84 of the root 80 to the upper edge 72 of crest 70. The threads 60 also include a lower surface 68 which extends from a top edge 82 of the root 80 to a lower edge 74 of the crest 70. Both the upper surface 66 and lower surface 68 angle upwards toward the head 70 as the surfaces 66, 68 extend from the root 80 to the crest 70. Both the crest 70 and root 80 exhibit a constant distance from the central axis 2 between the upper edge 72 and lower edge 74 and between the top edge 82 and the bottom edge 84.

In section, the surfaces 66, 68 extend linearly from the root 80 to the crest 70. However, as this contour is rotated helically about the threaded shaft 50 along with the threads 60, the upper surface 66 and lower surface 68 take on a curved surface appearance. This appearance is similar to that which would be formed by a linear section of the surface of a cone with a tip of the cone oriented downward and the cone rotated and translated upward along a central axis thereof. The upper surface 66 and lower surface 68 thus have a curved surface in three dimensions similar to that of a cone, but a linear character when viewed in section.

The upper surface 66 extends from the root 80 to the crest 70 at an upper surface angle α diverging from a reference plane 4 orthogonal to the central axis 2. The upper surface angle α is preferably 20° but could be any angle between 0° and 90°. The lower surface 68 extends from the root 80 to the crest 70 at a lower surface angle β with respect to the reference plane 4. The lower surface angle β is preferably 40° but could vary between 0° and 90°.

The upper surface angle α is preferably less than the lower surface angle β such that a thickness of the threads 60 at the crest 70 is less than a thickness of the threads 60 between adjacent roots 80. In this way, the threads 60 are provided with greater thickness, and hence greater strength adjacent the minor diameter 64 than at the major diameter 62 and are thus more capable of bearing the loads experienced within the hole H.

Referring now to figure 4, de ails of the hole H are shown. The hole H is preferably substantially complemental in form to the threaded shaft 50 of the pin 10. The hole H includes threads T which include a major diameter A and a minor diameter B. Each thread T includes a lower surface L and an upper surface U. The hole H includes a first curved wall G on the first side D of the crack C and a second curved wall I on the second side E of the crack C. The hole H is thus bisected by the crack C.

The hole H is preferably located so that the crack C divides the hole H into two substantially equal portions. Thus, the hole H is oriented to extend along a line which approximates the direction of orientation of the crack C with respect to the surface S. Preferably, the hole H extends to the crack C from the surface S down to a location where the crack C stops. However, the hole H can stop short of a full depth of the crack C (as shown in figures 1 and 4) when pins 10 of sufficient length are not available or when a hole H of shorter depth is sufficient to receive a pin 10 that can effectively support all of the crack C.

The threads T of the hole H are shaped to have surfaces L,U which conform to the upper surface 66 and lower surface 68 of the threads 60 of the pin 10. However, a major diameter A of the hole H is preferably slightly greater than a major diameter 62 of the threads 60 and the minor diameter B of the threads T is preferably slightly greater than a minor diameter 64 of threads 60.

This slight disparity provides a tolerance between the pin 10 and hole H for ease of fitting of the pin 10 into the hole H. Furthermore, this provides a finite amount of travel between the first curved wall G and the second curved wall I of the hole H when the pin 10 is tightened into the hole H, causing the first side D and second side E of the crack C to be drawn toward each other. Thus, the major diameter A and minor diameter B of the hole H are initially greater than the major diameter 62 and minor diameter 64 of the threads 60. After tightening the pin 10 into the hole H, this difference between the hole H and the threaded shaft 60 is reduced or eliminated.

Figures 5 through 7 show details of the tapping bit 550 preferably used to form the hole H. The tapping bit 550 is preferably a substantially cylindrical construct having a torque input head 590 at one end thereof and a bottom 552 on an opposite end thereof. A stop 580 defines a transitional region between a lesser diameter 582 and a greater diameter 584 portion of the tapping bit 550. The stop 580 is located a distance from the bottom 552 equal to a desired depth of the hole H to be formed by the tapping bit 550. The lesser diameter 582 of the tapping bit 550, below the stop 580, is preferably substantially similar to a diameter of the hole H before threading thereof with the threads T.

A plurality of teeth 560 are oriented proximate to the bottom 552 which extend helically around the tapping bit 550 at an angle similar to an angle of the threads T within the hole H. The teeth 560 include an upper side 562, a lower side 564, an outer side 566 and an inner side 568. Each of the teeth 560 is interrupted by a cutout groove 575 which prevents the teeth 560 from forming one continuous tooth extending along the tapping bit 550. The cutout groove 575 allows filings cut out of the hole H by the tapping bit 550 to escape from the teeth 560 and allow the teeth 560 to cut the threads T into the hole H without obstruction.

The teeth 560 are shaped with an upper side 582, lower side 564, outer side 586, and inner side 568. These sides 562, 564, 566, 568 are dimensioned in a manner similar to the threads T of the hole H. As noted above, the threads 60 of the pin 10 are slightly smaller in major diameter 62 and minor diameter 64 than the threads T of the hole H and thus, the teeth 560 are slightly larger in dimension than surfaces 66, 68 of the pin 10.

The upper sides 562 of each of the teeth 560 are oriented at an angle from a reference plane 554 orthogonal to a long axis of the tapping bit 550 at upper side angle ρ. The lower side 564 is angled at a lower side angle δ with respect to the reference plane 554. The lower side angle δ and upper side angle ρ are preferably similar to the lower surface angle β and upper surface angle α respectively.

A portion of the teeth 560 directly adjacent to the bottom 552 are beveled at a bevel 570 having a bevel angle y of preferably 60°. This bevel 570 allows the teeth 560 to cut the thread T into the hole H in progressively greater amounts as the tapping bit 550 initially enters the hole H. While the tapping bit 550 is preferably utilized to from the threads T within the hole H, other bits and other methods of forming threads may be utilized to form the threads T within the hole H.

In forming the threads T within the hole H, the tapping bit 550 is oriented overlying hole H and is coupled to an appropriate torque applying device, such as a drill. The bit 550 is then lowered into the hole H with the bottom 552 entering the hole H. As the tapping bit 550 is lowered into the hole H the threads T are cut into the first curved wall G and the second curved wall I of the hole H.

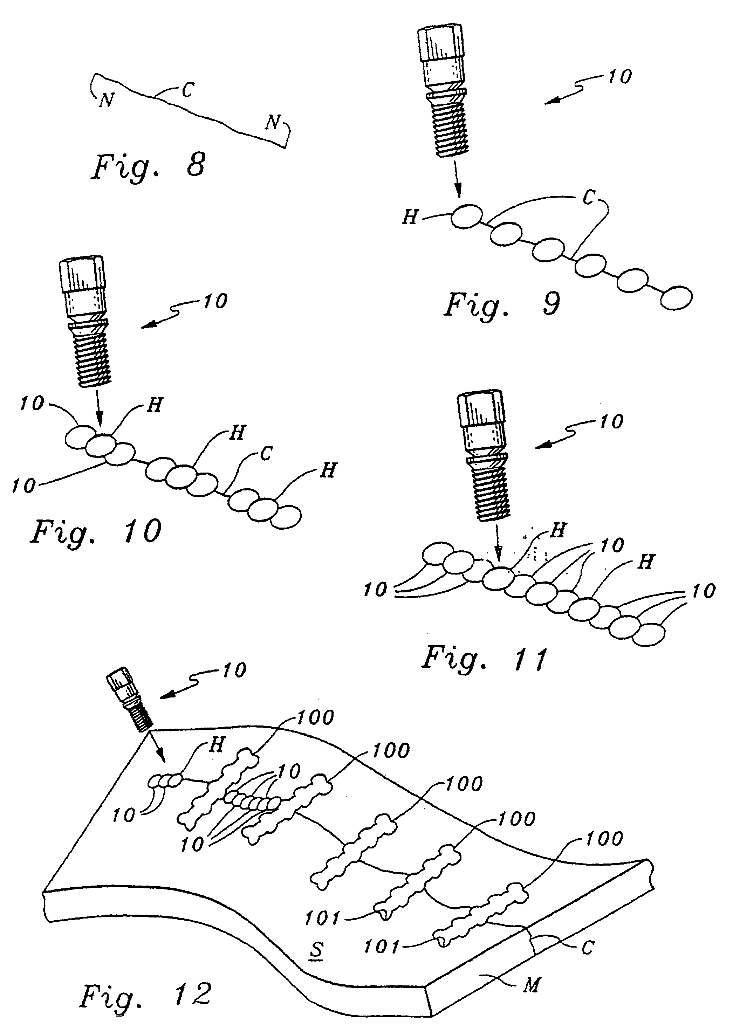

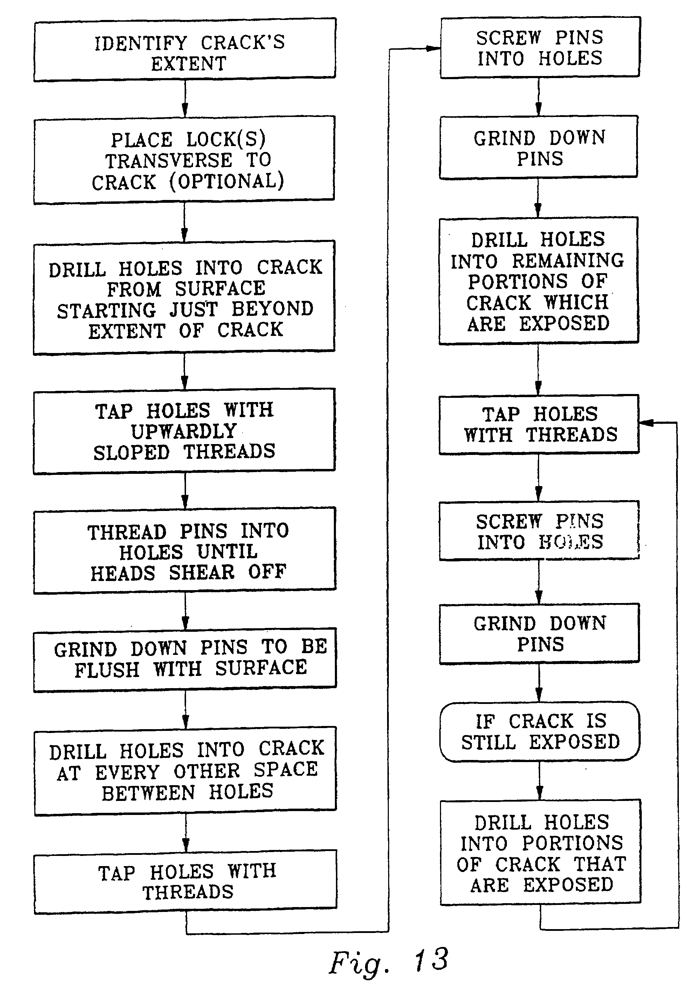

In use and operation and referring to figures 8 through 12 and figure 13, the pin 10 is preferably utilized in conjunction with other similar pins 10 in the following manner to mend a crack C within a material M. Initially, a user identifies the location and extent of the crack C. The crack C includes ends N defining an extent of the crack C along the surface S. Once the crack C has been fully identified, locks 100 may be optionally placed transverse to the crack C such as those disclosed in detail in U.S. Patent Number 4,662,806 (see figure 12). These locks 100 act to draw opposite sides of the crack C toward each other and to prevent the crack C from widening during the mending process. Each lock 100 is driven into a complementally formed, but slightly longer, lock receiving hole 101

Holes H are then drilled into the crack C along the length of the crack. The holes H preferably extend slightly beyond a visible extent of the crack C at each end of the crack C. This ensures that the entire crack C is included in the mending process. The holes H are spaced a distance apart slightly less than a diameter of each hole H.

The holes H are then tapped with threads T so that they take on an appearance such as that shown in figure 4. Once all of the holes H have been threaded, the pins 10 are threaded into the holes H. Preferably, the pins 10 are threaded into the holes H until the heads 20 thereof shear off at the neck 30. This ensures that the pins 10 have been fully tightened into the holes H. An appropriate grinding tool is then used to grind down the remainder of each pin 10 to be flush with the surface S.

While the crack mending procedure could be complete at this point, preferably holes are drilled into the crack C in between where pins 10 have already been placed (note that this can require that portions of pins 10 may need to be drilled out). Rather than drill holes H into every space between the pins 10 that have already been located into the crack C, holes H are drilled at every other gap between already located pins 10. Once these holes H are fitted with pins 10, remaining gaps between filled holes H are drilled to make holes H with pins 10 that are threaded thereinto.

Drilling of the holes H thus occurs in three stages. A first stage drills holes H at each end N of the crack C and every other hole H location that will eventually be drilled. A second stage drills holes H at any other gap along the crack C between adjacent holes H of the first stage. A third stage drills holes H at every remaining gap along the crack C between adjacent holes H.

Once the final portions of the crack C have been provided with holes H, all of the crack C visible upon the surface S will have been drilled out and incorporated into a portion of a hole H and threaded with a pin 10. However, at no time during the mending process will two holes H have been formed and not filled with pins 10 that are adjacent to each other and overlap each other.

In this way, each pin 10 fitted within the holes H is maintained with at least three-quarters of a circumference thereof in active engagement with the material M, insuring that the threads 60 of the pins 10 will not separate from the threads T of the hole H within the material M. The pins 10 are then ground down to be flush with the surface S leaving a surface S with no visible cracks C and only revealing a region where a series of pins 10 and, optionally locks 100 have been imbedded into the material M.

Referring again to figure 1, details of the exact mechanism of crack C closure are described. As the pin 10 is threaded into the hole H, rotation of the pin 10 causes a force F to be exerted between the threads 60 and the threads T of the hole H. This rotational force F is counteracted through the threads 60, T, causing the pin 10 to migrate downward into the hole H. When the pin 10 has entered the hole H a sufficient distance to cause the shoulder 40 to abut the surface S surrounding the hole H, this vertical downward response of the pin 10 to the rotational force F is halted.

However, continued force F applied rotationally to the pin 10 continues to cause the upper surface 66 of the threads 60 to engage the upper surface U of the threads T of the hole H. This continued force F, rather than drawing the pin 10 downward vertically along the central axis 2, exerts a force F' against the material M on each side of the hole H tending to draw the first curved wall G and the second curved wall I toward each other. This closing force F' causes the first side D and second side E of the crack C to be drawn toward each other. In this way, the pins 10 and also the pins 110, 210, 310, 410, 910, 1010 draw the first side D and second side E of the crack C toward each other, thus mending the crack C.

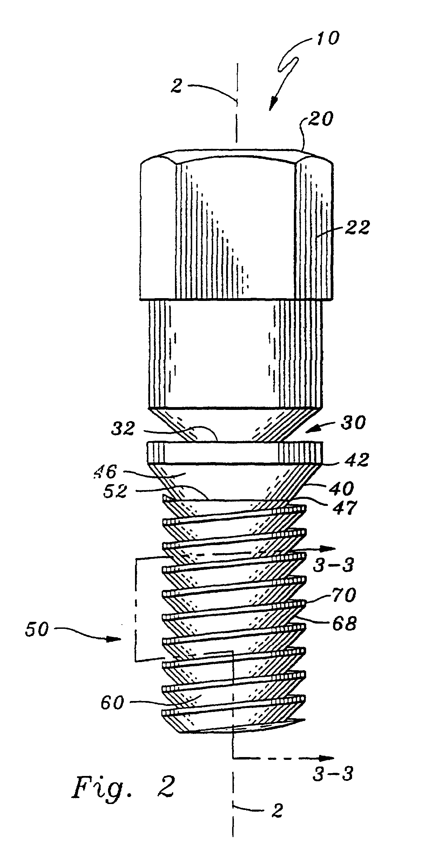

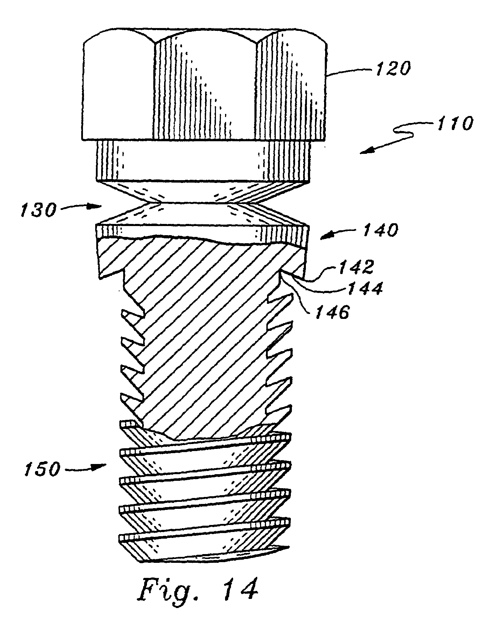

Referring now to figure 14, an alternative embodiment of the pin 10 is shown. Pin 110 is similar in form to the pin 10 except that the shoulder 140 of the pin 110 does not include a frustum 46 (see figure 2) but rather includes a cusp 144. The cusp 144 is formed by a greater diameter portion 142 and a lesser diameter portion 146, with the lesser diameter portion 146 adjacent the threaded shaft 150 yet closer to the head 120 than the greater diameter portion 142. This pin 110, when screwed into the hole H has the cusp 144 address the surface S surrounding the hole H and preferably impregnates the surface S somewhat. Thus, the shoulder 140 fits tightly into the surface S surrounding the hole H before the head 120 snaps off at the neck 130.

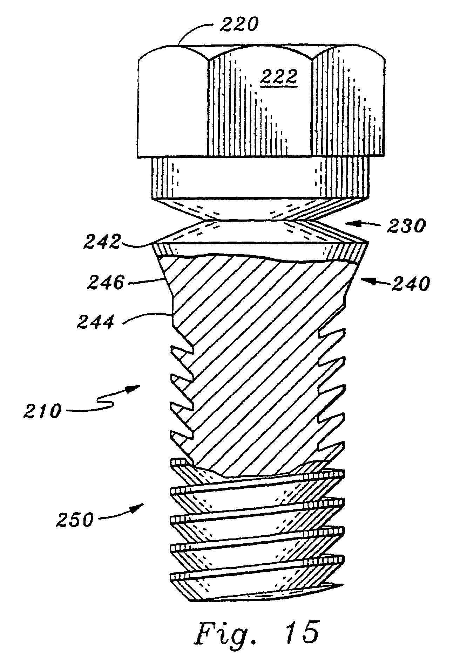

Referring now to figure 15, an alternative embodiment of the pin 10 is shown. This pin 210 includes a head 220 with facets 222 thereon above a neck 230 which extends to a shoulder 240 which in turn is connected to a threaded shaft 250. The pin 210 differs from the pin 10 in that the shoulder 240 has a greater diameter 242 and a lesser diameter 244 which bound opposite sides of a frustum 246 which diverges very gradually between the lesser diameter 244 and the greater diameter 242.

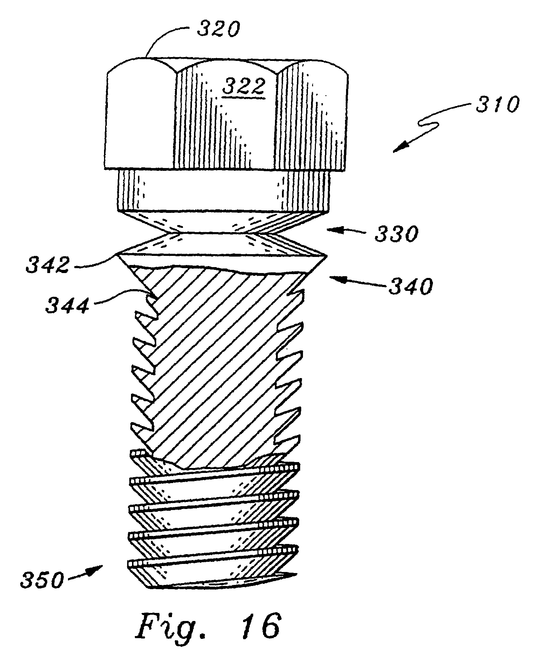

Figure 16 reveals an alternative embodiment of the pin 10. The pin 310 differs from the pin 10 of the preferred embodiment in that the shoulder 340 diverges more quickly between a lesser diameter 344 and a greater diameter 342. A head 320 with facets 322, neck 330 and threaded shaft 350 are substantially similar to the pin 10.

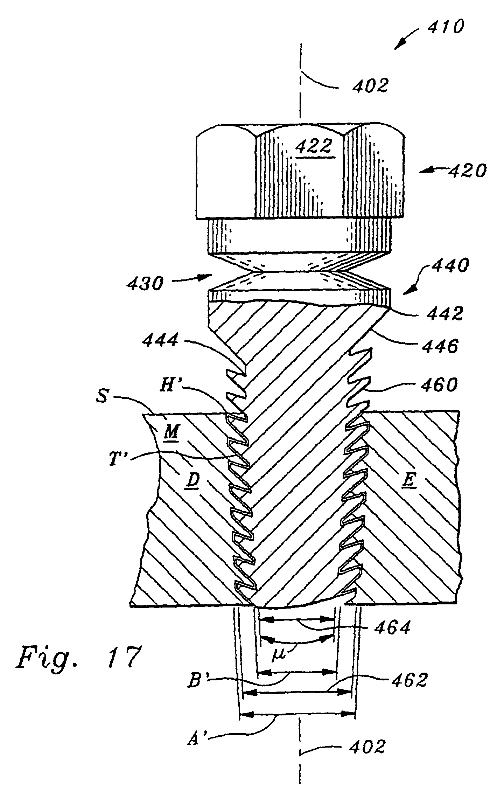

Figure 17 reveals an alternative embodiment of the pin 10. Pin 410 includes a head 420 with facets 422 similar to that exhibited by the pin 10. A neck 430 of the pin 410 is also similar to the neck 30 of the pin 10. A shoulder 440 of the pin 410 is optional, but shown in figure 17 in a form similar to a shoulder 340 exhibited by the pin 310. However, the threaded shaft 450 of the pin 410 is distinct from the threaded shaft 50 of the pin 10 in that the minor diameter 464 of the pin 410 is not constant, but rather decreases as it moves away from the head 420.

The minor diameter 464 thus diverges at an angle µ divergent from a parallel orientation as is exhibited by the pin 10. This diverging minor diameter 464 is mirrored by the major diameter 462 of the pin 410. In use and operation, the pin 410 is screwed into a hole H' having a complementally formed diverging major diameter A' and minor diameter B' within threads T'. Eventually the pin 410 reaches a point at which threads 460 abut against the threads T' in the hole H'.

This abutment prevents the pin 410 from further translation downward along central axis 402. Thus, further rotation of the pin 410 causes the first side D and second side E of the crack C, upon which the hole H is located, to be drawn together. The neck 430 snaps the head 420 off when a sufficient torque is applied to the head 420, through the facets 422, to ensure that the threads 460 have effectively engage the threads T' of the hole H'.

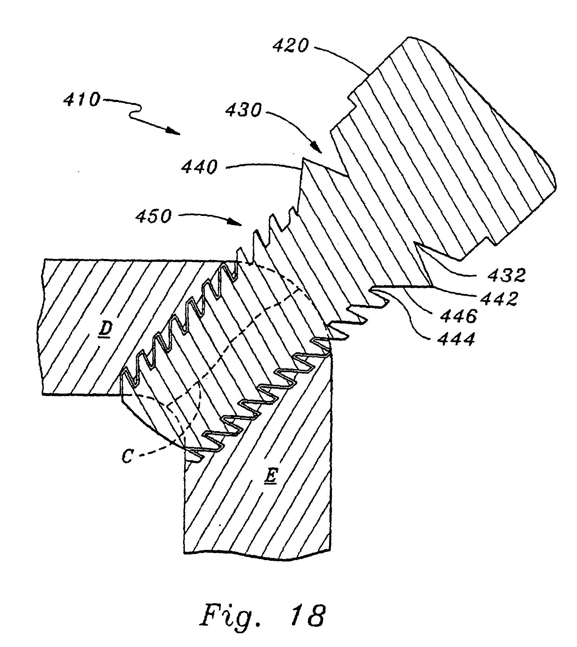

Figure 18 reveals a cornered portion of the material M with a crack C therein. Figure 18 schematically represents a possible orientation of the pin 410 which would draw a first side D and second side E of the crack C toward each other, thus repairing the crack C. This utilization of the pin 410 allows opposite sides of the crack C to be drawn together when no convenient flat surface S is provided for abutment with the shoulder 440.

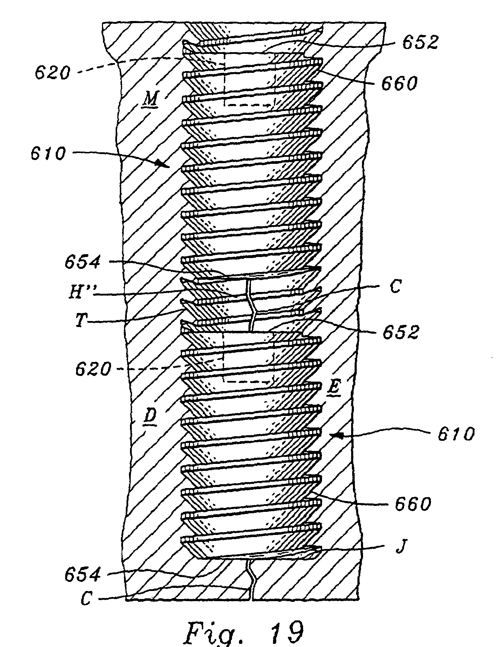

Referring now to figure 19, an alternative embodiment of pin 10 is shown. The pin 610 is particularly designed for use in holes H" that are especially long, because a long crack C has formed in a thick material M. The pin 610 is similar to the pin 10 except that the pin 610 does not have a head, neck, or shoulder. Instead, the pin 610 has a top 652 with a torque tool receiver 620 therein. The pin 610 is screwed into the hole H" with the threads 660 engaging the threads T until the bottom 654 abuts against a bottom wall J of the hole H". This abutment prevents further translation of the pin 610 into the hole H". Further rotation of the pin 610 causes the threads 660 to draw the threads T and associated crack sides D, E toward each other.

A second pin 610 can then be screwed into the hole H" directly over the first pin 610. The second pin 610 will continue into the hole H" until its bottom 654 abuts with the top 652 of the first pin 610. This abutment allows the second pin 610 to draw sides D, E of the crack C together. In this way, long cracks C can be securely mended.

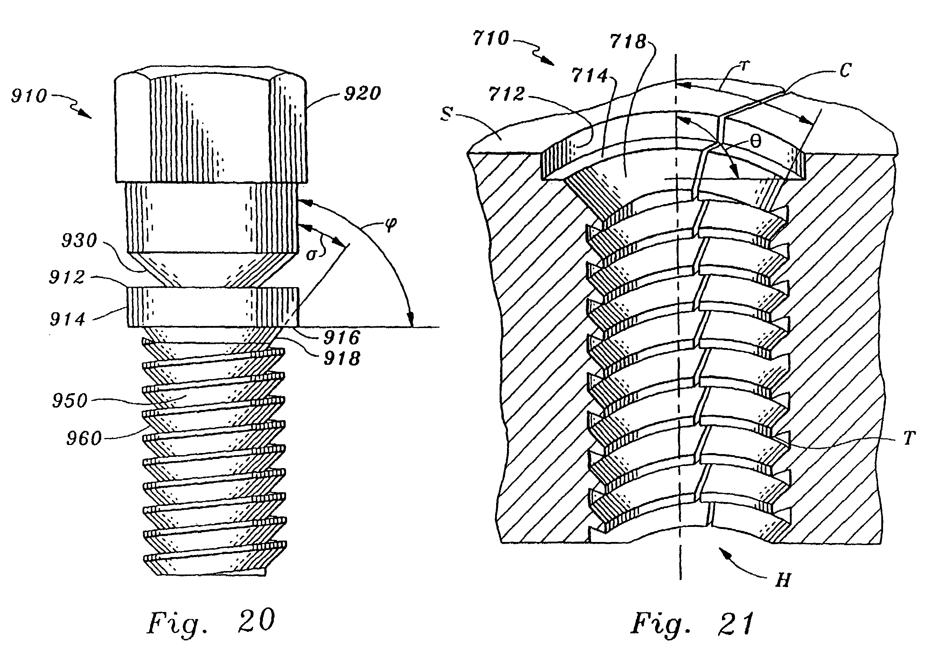

Referring now to figure 20, an alternative embodiment of the pin 10 is shown. The pin 910 includes a head 920 and neck 930 similar to the head 20 and the neck 30 of the pin 10 (figure 1). The pin 910 also includes a threaded shaft 950 with threads 960 similar to the threaded shaft 50 and threads 60 of the pin 10. The pin 910 differs from the pin 10 in that a shoulder 912 is provided differing from the shoulder 40 of the pin 10. The shoulder 912 preferably includes a side wall 914 of substantially cylindrical construction and a bottom wall 916 which is preferably substantially perpendicular to the side wall 914 and to a long axis of the pin 910.

An angle φ between the bottom wall 916 and the side wall 914 is preferably 90°. However, the angle φ can be increased so that the bottom wall 916 exhibits a cusp-like appearance similar to that shown in figure 14. The bottom wall 916 can abut against the surface S, but preferably abuts against a floor 714 (figure 21) within a counterbore 710 surrounding the hole H adjacent the surface S.

The shoulder 912 connects to the threaded shaft 950 through a frustum 918. The frustum 918 provides clearance between the shoulder 912 and an uppermost end of the threaded shaft 950, which allows the threads 960 to be formed with the upwardly sloping surfaces characterized in detail hereinabove with respect to the pin 10. The frustum 918 preferably has an exterior surface which angles at a slope σ of preferably 30° away from the sidewall 914 of the shoulder 912.

Figure 21 reveals a modified form of the hole H which particularly facilitates secure attachment of the pin 910 therein and secure binding of opposite sides of the crack C. Particularly, the hole H includes a counterbore 710 formed at a transition between the hole H and the surface S. The counterbore 710 preferably includes a cylindrical side surface 712 dimensioned similarly to the side wall 914 of the pin 910. The side surface 912 extends from the surface S down to the floor 714. The floor 714 is preferably angled at an angle θ of approximately 90° away from a central axis of the hole H.

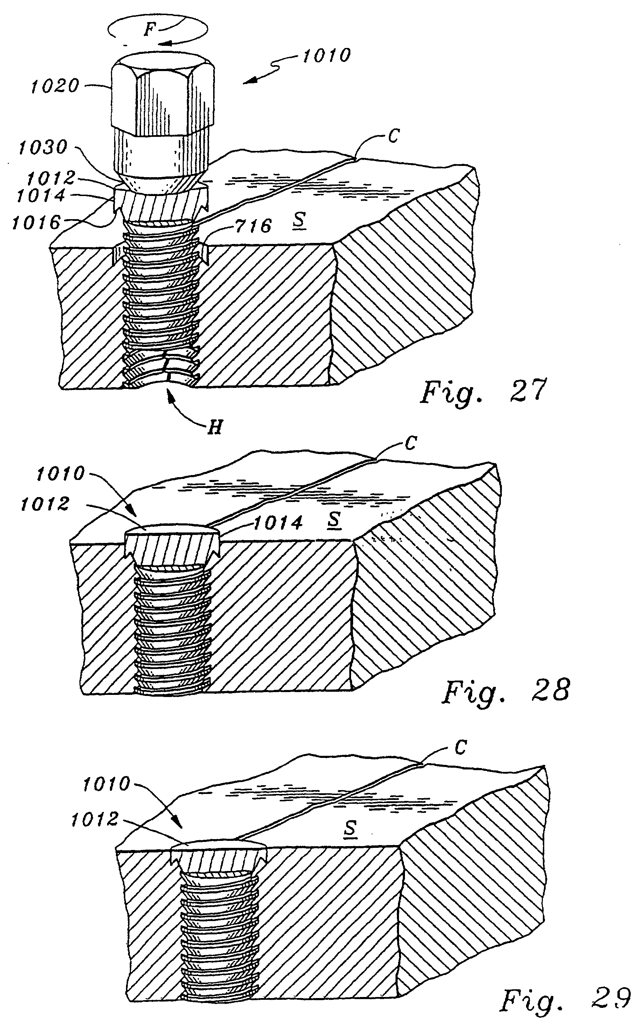

Alternatively, the angle θ can be greater than 90° and conform to any angle exhibited by the angle φ of the bottom wall 916 of the pin 910. Examples of this angle θ greater than 90° are exhibited in the shoulder 140 of the pin 110 (figure 14) and the bottom wall 1016 of the pin 1010 (figures 27 through 29) discussed further hereinbelow. The floor 714 extends from a lower edge of the side surface 912 into a thread relief 718 which extends down from the floor 714 to the threads T along a slope τ preferably of approximately 30° from the central axis of the hole H.

The counterbore 710 allows the shoulder 912 to rest below the surface S partially so that when portions of the shoulder 912 are ground away to a level coplanar with the surface S, a portion of the shoulder 912 remains and allows the pin 910 to continue to maintain an opposing force between the shoulder 912 and the threads 960 equally on opposite sides of the crack C at floor 714 to hold opposite sides of the crack C together. When the surface S is sloped or curved, the counterbore 710 provides a surface against which the shoulder 912 can still securely contact. Also, when a material is severely cracked so that the opposite sides of the crack C are not held together, the counterbore 710 prevents one side of the crack C from being elevated upwards which would allow the threads T, 960 to disengage and the joint to separate.

When the crack C passes through the material at an angle non-perpendicular to the surface S, the hole H may be formed within the plane of the crack and non-perpendicular to the surface S with the floor 714 of the counterbore 710 perpendicular to the hole H and non-parallel with the surface S. In this way, the shoulder 912 of the pin 910 can still securely rest within the counterbore 710 without having the shoulder 912 abut one side of the crack C before the opposite side of crack C. The shoulder 912 of the pin 910 is preferably of sufficient height that a top portion of the shoulder 912 can be ground away to a plane parallel to the surface S while still providing sufficient material within the shoulder 912 to resist deflection of the shoulder 912 when the pin 910 is secured within the hole H.

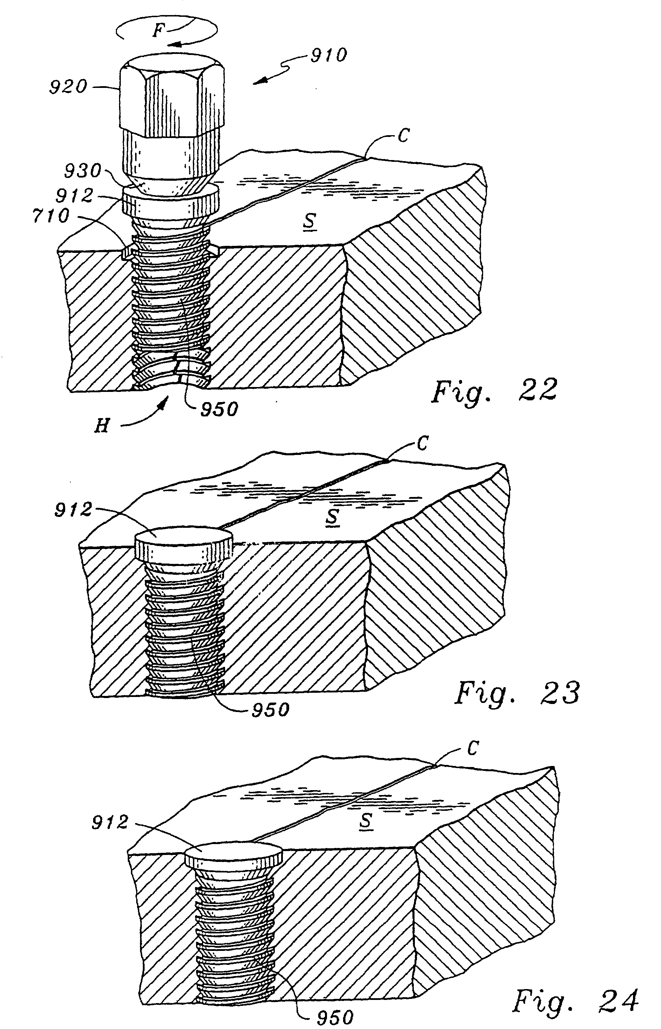

Referring now to figures 22 through 24, details of the utilization of the pin 910 are shown. After the threaded hole H is formed passing within a plane substantially coplanar with the crack C and the counterbore 710 has been formed, the pin 910 is located within the hole H by rotation about arrow F (figure 22). Rotation continues about arrow F until the shoulder 912 abuts against the floor 714 (figure 21) of the counterbore 710. As additional rotational forces are applied about arrow F, opposite sides of the crack C are drawn together as discussed hereinabove with respect to utilization of pin 10. Once sufficient torque is applied that the neck 930 can no longer resist deformation, the head 920 is severed therefrom as shown in figure 23. Finally, a portion of the shoulder 612 above the surface S is ground until coplanar with the surface S and is peened to further seal the pin 910 into the hole H. Various adhesive fluids may be utilized to further enhance the secure locking of the pin 910 within the hole H.

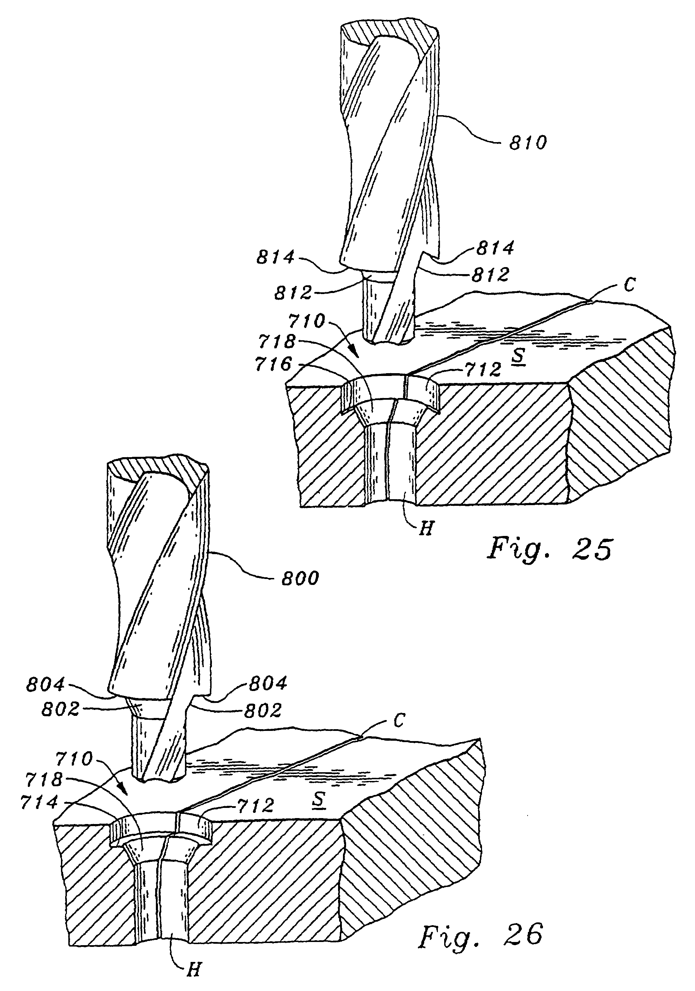

With reference now to figure 25, details of the formation of the counterbore 710 are shown. A spot facing bit 800 having a particularly formed cutting surface is utilized to form the counterbore 710. Particularly, the spot facing bit 800 includes an angled edge 802 having an angle which conforms to the slope τ of the thread relief 18 and a floor forming edge 804 having an angle which conforms substantially with the angle θ of the floor 714 of the counterbore 710. A portion of the spot facing bit 800 below the angled edge 802 is preferably not greater in diameter than a diameter of the hole H. Thus, when the spot facing bit 800 is lowered axially into the hole H, the angled edge 802 and floor forming edge 804 form the counterbore 710. A depth of the counterbore 710 is preferably controlled by some form of drill stop or other jig to prevent the counterbore 710 from passing too deeply into the hole H.

Alternatively, and shown in figure 26, a spot facing bit 810 can be used which has a cusp-cutting edge 814 and an angled edge 812 which form a cusped floor 716 within the counterbore 710. This cusped floor 716 can complement a geometry of a cusped pin 1010 (shown in figures 27 through 29) which is similar in many ways to the pin 110 (figure 14).

The cusped pin 1010 includes a head 1020 and neck 1030 similar to that of the pin 910. However, the cusped pin 1010 has a shoulder 1012 with a bottom surface 1016 which exhibits an angle φ (figure 20) greater than 90°. When this cusped pin 1010 is utilized in a hole H having a counterbore 710 with a cusped floor 716, the shoulder 1012 and floor 716 can interface and cause further amplification of the crack closing force F' (figure 1), especially near the surface S. As shown in figures 27 through 29, the cusped pin 1010 is preferably utilized similarly to the manner of use of the pin 910.

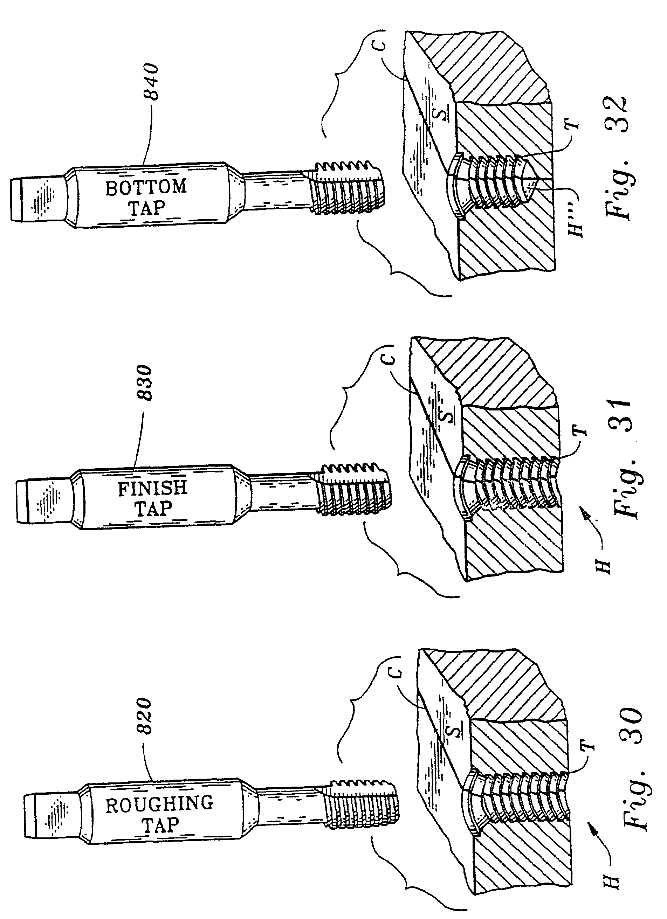

With reference now to figures 30 through 32, details of the threading of the hole H are shown. As an alternative to the tapping bit 550 shown in figure 5, a series of taps 820, 830, 840 can be used to most effectively form the threads T within the hole H. Initially, a roughing tap 820 is passed axially into the hole H to form a first rough shape of the threads T. The roughing tap 820 is followed by a finishing tap 830 which completes formation of the threads T within an open hole H. If a hole H''' formed as a blind bore is to receive the pin 10, 110, 210, 310, 410, 610, 910, a bottom tap 840 can be utilized to fully form the threads T to within one thread T of a bottom of the hole H"'. By utilizing the three taps 820, 830, 840 in series, a more precisely threaded hole H, H''' can be formed with less damage to the taps 820, 830, 840.

Moreover, having thus described the invention, it should be apparent that numerous structural modifications and adaptations may be resorted to without departing from the scope of the invention as set forth by the appended claims.

## Claims

1. A method for cold repair of a crack in a cast monolith where the crack is defined as a gap passing through a portion of the monolith to define at least two sides in the monolith separated from each other by a width of the crack, comprising the steps of
- drilling a hole extending into the crack such that one side of the crack includes a portion of said hole and another side of said crack includes another portion of said hole, said hole including hole threads therein with a major diameter and a minor diameter
- threading a pin (10) in said hole, having a head (20) including a means (22) to transfer torque to said pin, a threaded shaft on said pin extending from said head along a central axis (2), and means (40) for opposing axial translation of said pin (10) positioned to contact the material near the crack,
**characterised in that** a portion of each hole thread adjacent the major diameter is closer to the surface than another portion of the hole threads and,
at least one of said shaft threads (60) includes a crest (70) defining a major diameter (62) of said threaded shaft (50), a root defining a minor diameter (64) of said threaded shaft, and an upper surface (66) extending from a bottom edge of said root to an upper edge of said crest, said upper surface having a portion thereof extending toward said crest at an angle greater than zero from a reference plane perpendicular to said central axis of said pin (10),
said threading allowing said opposition means to coact with said threads of said hole and said threads of said pin and cause further rotation of said pin to force the first side of the crack and the second side of the crack together.

2. A method according to claim 1 wherein said opposition means is a shoulder (40) interposed between the head and the threaded shaft.

3. A method according to claim 1 wherein when the torsional force applied to said head exceeds a maximum torsional force for which said threads and said threaded shaft are designed to withstand, the head is severed from said threaded shaft at a neck (30) interposed between said head (20) and said shoulder (40), said neck including a crease (32) having a lesser diameter than a diameter of said threaded shaft.

4. A method according to any preceding claim wherein said threads of said threaded shaft are sized such that a major diameter of said threads of said pin are slightly less than a major diameter of the treads of the hole, whereby when said pin is threaded into said hole a gap exits between the crest of the threads of the pin and a major diameter of the threads of the hole, thereby allowing said threads of said pin to slide along the threads of the hole causing the first curved wall and second curve wall of the hole to be drawn toward each other, and further drawing the first side of the crack and the second side of the crack toward each other.

5. A method according to claim 2 wherein comprising furthermore the step of grinding the portion of the shoulder above the surface of the crack until coplanarity with said surface is achieved.

6. A method according to any preceding claims wherein the hole is formed using a tapping bit (550).

7. A pin for location into a threaded hole for cold repair of a crack comprising in combination :
- a head (20) on said pin including a means to transfer torque to said pin
- a threaded shaft (50) on said pin (10) extending from said head (20) along a central axis,
wherein
at least one of the shaft threads (60) includes a crest (70) defining a major diameter (62) of said threaded shaft (50), a root defining a minor diameter (64) of said threaded shaft, and an upper surface extending from a bottom edge of said root to an upper edge of said crest, said upper surface having a portion thereof extending toward said crest at an angle greater than zero from a reference plane perpendicular to said central axis of said pin,
and said pin being provided with a shoulder (40) interposed between the head (20) and the shaft (50), **characterised in that** said shoulder has a lower side provided with a cusp like relieved area.

8. The pin of claim 7 wherein the angle is greater than 0°C but less than 90°.

9. The pin of claim 7 or 8 wherein the pin includes a crease interposed between said shoulder and said head to dissociate said head from said threaded shaft and shoulder upon application of appropriate force which assures clamping.

10. The pin of any of the claims 7 to 9 wherein the shoulder is radiating at a top most area from said pin shaft, said shoulder having a span to straddle the crack such that one portion of said shoulder is located on one side of the crack and another portion of said shoulder is located on another side of said crack.

11. The pin of any of the claims 7 to 9 wherein said shoulder (40) is tapered.

12. The pin according to any of the claims 7 to 11 wherein a neck is interposed between said head and said shoulder, the neck including a crease and having a lesser diameter than a diameter of said threaded shaft.

13. The pin according to claim 7 wherein the root tapers conically and narrows towards said shaft bottom, said threads on said pin having a similar taper such that each said extreme upper edge of said pin thread defines the crest which parallels said root taper.

14. The pin of the preceding claim wherein said thread and crest is formed from a juncture of said upper surface and a lower surface which extends outwardly,
said lower surface oriented at an angle greater than O° from said reference plane and less than said upper surface angle.

15. The pin of claim 7 wherein said threads on said pin are formed by said upper surface and by a lower surface which extends outwardly from said root below said upper surface, said lower surface oriented at an angle greater than 0° from said reference plane and less than said upper surface angle.

16. The pin of claim 7 wherein said root is a cylinder.

## Patentansprüche

1. Ein Verfahren zur kalten Reparatur eines Risses in einem gegossenen Monolithen, wobei der Riß eine Spalte bildet, die sich durch einen Teil des Monolithen erstreckt und die dabei wenigstens zwei Seiten in dem Monolithen definiert, die voneinander um die Breite des Risses getrennt sind, das die folgenden Schritte umfaßt:
- Einbringen einer Bohrung, die sich derart in den Riß erstreckt, daß eine Seite des Risses einen Teil der genannten Bohrung enthält und eine andere Seite des genannten Risses einen anderen Teil der genannten Bohrung enthält, wobei die Bohrung ein Innengewinde mit einem Spitzendurchmesser und einem Kerndurchmesser aufweist
- Einschrauben eines Bolzens (10) in die genannte Bohrung, der einen Kopf (20) mit Mitteln (22) zur Übertragung eines Drehmomentes auf den genannten Bolzen aufweist, einem mit einem Gewinde versehenen Schaft an diesem Bolzen, der sich von dem genannten Kopf ausgehend entlang einer zentralen Achse (2) erstreckt, und Mittel (40), die einer axialen Verschiebung des Bolzens (70) entgegenwirken, wenn er sich in Kontakt mit dem Material in der Umgebung des Risses befindet,
**dadurch gekennzeichnet, daß** ein Teil jedes Innengewindes im Bereich des Spitzendurchmessers der Oberfläche näher liegt als ein anderer Teil des Innengewindes und,
daß wenigstens einer der genannten Schäfte (60) einen Kamm (70) aufweist, der einen Spitzendurchmesser (62) des genannten Gewindeschaftes (50) bildet, einen Kern, der einen Kerndurchmesser (64) des genannten Gewindeschaftes bildet, und eine obere Oberfläche (66), die sich von einer unteren Kante des genannten Kerns zu einer oberen Kante des genannten Kamms erstreckt, wobei die genannte obere Oberfläche einen Teil aufweist, der sich in Richtung auf den genannten Kamm unter einem Winkel, der größer als Null ist, in Bezug auf eine Referenzebene senkrecht zur genannten zentralen Achse des genannten Bolzens (10) erstreckt,
wobei das genannte Gewinde es den genannten entgegenwirkenden Mitteln ermöglicht, mit dem genannten Gewinde der genannten Bohrung und dem genannten Gewinde des genannten Bolzens zusammenzuwirken und eine weitere Rotation des genannten Bolzens zu bewirken, um die erste Seite des Risses und die zweite Seite des Risses zusammenzuzwingen.

2. Ein Verfahren gemäß Anspruch 1, bei dem das genannte entgegenwirkende Mittel aus einer Schulter (40) besteht, die zwischen dem Kopf und dem Gewindeschaft angeordnet ist.

3. Ein Verfahren gemäß Anspruch 1, bei dem die auf den genannten Kopf ausgeübte Torsionskraft die Maximalkraft überschreitet, der zu widerstehen das genannte Gewinde und der genannte Gewindeschaft ausgelegt sind, wobei der Kopf vom genannten Gewindeschaft durch einen Hals (30) getrennt ist, der zwischen dem genannten Kopf (20) und der genannten Schulter (40) angeordnet ist, wobei der Hals eine Kerbe (32) besitzt, die einen geringeren Durchmesser als der Durchmesser des genannten Gewindeschaftes aufweist.

4. Ein Verfahren gemäß einem der vorangehenden Ansprüche, bei dem das genannte Gewinde des genannten Gewindeschaftes so bemessen ist, daß ein Spitzendurchmesser des genannten Gewindes des genannten Bolzens geringfügig kleiner als ein Spitzendurchmesser des Gewindes der Bohrung ist, wobei ein Spalt zwischen dem Kamm des Gewindes des Bolzens und einem Spitzendurchmesser des Gewindes der Bohrung vorhanden ist, wenn der genannte Bolzen in die genannte Bohrung geschraubt wird, der es dem genannten Gewinde des genannten Bolzens ermöglicht, entlang den Gewindegängen der Bohrung zu gleiten, wodurch eine erste gekrümmte Wand und eine zweite gekrümmte Wand der Bohrung zueinander gezogen werden und wodurch darüber hinaus die erste Seite des Risses und die zweite Seite des Risses zueinander gezogen werden.

5. Ein Verfahren gemäß Anspruch 2, das außerdem den Schritt umfaßt, daß der Teil der Schulter oberhalb der Oberfläche des Risses so weit abgeschliffen wird, daß eine Koplanarität mit der genannten Oberfläche erzielt wird.

6. Ein Verfahren gemäß einem der vorangehenden Ansprüche, bei dem die Bohrung mittels eines Gewindeschneiders (550) erzeugt wird.

7. Ein Bolzen zur Einbringung in eine Gewindebohrung zur kalten Reparatur eines Risses, der in Kombination folgendes umfaßt:
- einen Kopf (20) an dem genannten Bolzen mit Mitteln zur Übertragung eines Drehmomentes auf den genannten Bolzen
- einen Gewindeschaft (50) an dem genannten Bolzen (10), der sich von dem genannten Kopf (20) ausgehend entlang einer zentralen Achse erstreckt,
wobei
wenigstens einer der Gewindegänge (60) des Schaftes einen Kamm (70) aufweist, der einen Spitzendurchmesser (62) des genannten Gewindeschaftes (50) bildet, einen Kern, der einen Kerndurchmesser (64) des genannten Gewindeschaftes bildet, und eine obere Oberfläche (66), die sich von einer unteren Kante des genannten Kerns zu einer oberen Kante des genannten Kamms erstreckt, wobei die genannte obere Oberfläche einen Teil aufweist, der sich in Richtung auf den genannten Kamm unter einem Winkel erstreckt, der größer als Null ist, bezogen auf eine Referenzebene senkrecht zur genannten zentralen Achse des genannten Bolzens (10)
und daß der genannte Bolzen mit einer Schulter (40) versehen ist, die zwischen dem Kopf (20) und dem Schaft (50) angeordnet ist, **dadurch gekennzeichnet, daß** die genannte Schulter eine untere Seite aufweist, die mit einem spitz zulaufenden dünneren Bereich versehen ist.

8. Der Bolzen gemäß Anspruch 7, bei dem der Winkel größer als 0° aber kleiner als 90 ° ist.

9. Der Bolzen gemäß Anspruch 7 oder 8, bei dem der Bolzen eine Kerbe aufweist, die zwischen der genannten Schulter und dem genannten Kopf angeordnet ist, um den genannten Kopf vom genannten Gewindeschaft zu trennen, wenn eine geeignete Kraft aufgebracht wird, um das Klemmen zu erzielen.

10. Der Bolzen gemäß einem der Ansprüche 7 bis 9, bei dem sich die Schulter vom obersten Teil des genannten Bolzenschaftes aus radial erstreckt, wobei die genannte Schulter eine Breite aufweist, die geeignet ist, den Riß derart zu überbrücken, daß ein Teil der genannten Schulter auf einer Seite des Risses angeordnet ist und ein anderer Teil der genannten Schulter auf einer anderen Seite des genannten Risses angeordnet ist.

11. Der Bolzen gemäß einem der Ansprüche 7 bis 9, bei dem sich die Schulter (40) verjüngt.

12. Der Bolzen gemäß einem der Ansprüche 7 bis 11, bei dem ein Hals zwischen dem genannten Kopf und der genannten Schulter angeordnet ist, wobei der Hals eine Kerbe aufweist, die einen geringeren Durchmesser als der Durchmesser des genannten Gewindeschaftes besitzt.

13. Der Bolzen gemäß Anspruch 7, bei dem sich der Kern konisch verjüngt und sich in Richtung auf den Fuß des Schaftes verengt, wobei das genannte Gewinde auf dem genannten Bolzen eine ähnliche Verjüngung aufweist derart, daß jede äußere obere Kante des genannten Gewindes des Bolzens einen Kamm bildet, der parallel zur Verjüngung des Kernes verläuft.

14. Der Bolzen gemäß dem vorangehenden Anspruch, bei dem das genannte Gewinde und der Kamm durch ein Zusammentreffen der genannten oberen Oberfläche und einer unteren Oberfläche gebildet werden, die sich nach außen erstreckt, wobei die genannte untere Oberfläche unter einem Winkel größer als 0° von der genannten Referenzfläche und weniger als dem Winkel der genannten oberen Oberfläche verläuft.

15. Der Bolzen gemäß Anspruch 7, bei dem das genannte Gewinde auf dem genannten Bolzen von der genannten oberen Oberfläche und von einer unteren Oberfläche gebildet werden, die sich von dem genannten Kern unterhalb der genannten oberen Oberfläche nach außen erstreckt, wobei die genannte untere Oberfläche unter einem Winkel größer als 0° von der genannten Referenzfläche und weniger als dem Winkel der genannten oberen Oberfläche verläuft.

16. Der Bolzen gemäß Anspruch 7, bei dem der genannte Kern aus einem Zylinder besteht.

## Revendications

1. Procédé de réparation à froid d'une fissure dans un monolithe moulé, où la fissure est définie comme un trou passant dans une partie du monolithe pour définir au moins deux côtés dans le monolithe, séparés l'un de l'autre par une largeur de la fissure, comprenant les étapes consistant à :
- forer un trou se prolongeant dans la fissure de sorte qu'un côté de la fissure comprenne une partie du trou et que l'autre côté de la fissure comprenne une autre partie du trou, le trou comprenant des filets de trou avec un grand diamètre et un petit diamètre ;
- visser une broche (10) dans le trou, ayant une tête (20) comprenant un moyen (22) pour transférer un couple à la broche, une axe fileté sur la broche se prolongeant depuis la tête sur un axe central (2) et un moyen (40) pour opposer la translation axiale de la broche (10) placée au contact du matériau près de la fissure ;
**caractérisé en ce qu'**une partie de chaque filet du trou adjacent au grand diamètre est plus proche de la surface qu'une autre partie du filet de trou, et
**en ce qu'**au moins l'un des filets (60) de l'axe comprend une crête (70) définissant un grand diamètre (62) de l'axe fileté (50), une base définissant un petit diamètre (64) de l'axe fileté, et une surface supérieure (66) se prolongeant depuis un bord inférieur de la base jusqu'à un bord supérieur de la crête, la surface supérieure ayant une partie de celle-ci se prolongeant jusqu'à la crête avec un angle supérieur à zéro depuis un plan de référence perpendiculaire à l'axe central de la broche (10),
le vissage permettant au moyen d'opposition de coagir avec les filets du trou et les filets de la broche et de provoquer une rotation de la broche pour forcer à rassembler le premier côté de la fissure et le deuxième côté de la fissure.

2. Procédé suivant la revendication 1, dans lequel le moyen d'opposition est un épaulement (40) interposé entre la tête et l'axe fileté.

3. Procédé suivant la revendication 1, dans lequel la force de torsion appliquée sur la tête dépasse une force de torsion maximale à laquelle doivent résister les filets et l'axe fileté, la tête étant sectionnée depuis l'axe fileté à un cou (30) interposé entre la tête (20) et l'épaulement (40), le cou comprenant un pli (32) ayant un diamètre inférieur au diamètre de l'axe fileté.

4. Procédé suivant l'une quelconque des revendications précédentes, dans lequel les filets de l'axe fileté ont une taille telle que le grand diamètre des filets de la broche est légèrement inférieur au grand diamètre des filets du trou, de sorte que quand la broche est vissée dans le trou, il existe un intervalle entre la crête des filets de la broche et le grand diamètre des filets du trou, pour permettre aux filets de la broche de glisser sur les filets du trou de manière à provoquer le rapprochement de la première paroi courbée et de la deuxième paroi courbée du trou, et ensuite rapprocher le premier côté de la fissure et le deuxième côté de la fissure.

5. Procédé suivant la revendication 2, qui comprend en outre l'étape de broyage de la partie d'épaulement au-dessus de la surface de la fissure jusqu'à ce que l'on obtienne une coplanéité avec la surface.

6. Procédé suivant l'une quelconque des revendications précédentes, dans lequel le trou est formé à l'aide d'un mèche (550).

7. Broche à insérer dans un trou fileté pour la réparation à froid d'une fissure, comprenant l'association de :
- une tête (20) de la broche, comprenant un moyen pour transférer un couple à la broche ;
- un axe fileté (50) sur la broche (10), se prolongeant depuis la tête (20) sur un axe central, où
au moins l'un des filets (60) de l'axe comprend une crête (70) définissant un grand diamètre (62) de l'axe fileté (50), une base définissant un petit diamètre (64) de l'axe fileté, et une surface supérieure se prolongeant depuis un bord inférieur de la base jusqu'à un bord supérieur de la crête, la surface supérieure ayant une partie de celle-ci se prolongeant jusqu'à la crête avec un angle supérieur à zéro depuis un plan de référence perpendiculaire à l'axe central de la broche,
la broche étant munie d'un épaulement (40), interposé entre la tête (20) et l'axe (50), **caractérisé en ce que** l'épaulement a un côté inférieur muni d'une zone allégée.

8. Broche suivant la revendication 7, dans laquelle l'angle est supérieur à 0°, mais inférieur à 90°.

9. Broche suivant la revendication 7 ou 8, où la broche comprend un pli interposé entre l'épaulement et la tête pour dissocier la tête de l'axe fileté et l'épaulement lors de l'application d'une force appropriée qui assure le serrage.

10. Broche suivant l'une quelconque des revendications 7 à 9, dans laquelle l'épaulement rayonne sur la zone supérieure de l'axe de la broche, l'épaulement ayant un intervalle pour enjamber la fissure de telle sorte qu'une partie de l'épaulement se trouve sur un côté de la fissure et l'autre partie de l'épaulement se trouve sur l'autre côté de la fissure.

11. Broche suivant l'une quelconque des revendications 7 à 9, dans laquelle l'épaulement (40) est conique.

12. Broche suivant l'une quelconque des revendications 7 à 11, dans laquelle un cou est interposé entre la tête et l'épaulement, le cou comprenant un pli (32) ayant un diamètre inférieur au diamètre de l'axe fileté.

13. Broche suivant la revendication 7, dans laquelle la base est conique et plus étroite vers la base de l'axe, les filets de la broche ayant une forme conique similaire de sorte que chaque bord supérieur extrême de filet de broche définisse la crête qui est parallèle au cône de la base.

14. Broche des revendications précédentes, dans laquelle le filet et la crête sont formés par la jonction de la surface supérieure et d'une surface inférieure qui s'étend vers l'extérieur, la surface inférieure étant orientée d'un angle supérieur à 0° depuis le plan de référence et inférieur à l'angle de la surface supérieure.

15. Broche suivant la revendication 7, dans laquelle les filets de la broche sont formés de la surface supérieure et d'une surface inférieure qui s'étend vers l'extérieur depuis la base sous la surface supérieure, la surface inférieure étant orientée d'un angle supérieur à 0° depuis le plan de référence et inférieur à l'angle de la surface supérieure.

16. Broche suivant la revendication 7, dans laquelle la base est cylindrique.
